# EUROPEAN PATENT APPLICATION

(11) **EP 3 270 287 A1**
(43) Date of publication of application: **17.01.2018**
(21) Application number: 15885287.1
(22) Date of filing: 22.12.2015
(51) Int. Cl.: G06F 9/46

(54) **SCHEDULING METHOD AND SYSTEM FOR VIDEO ANALYSIS TASKS**

(30) Priority: 13.03.2015 CN 201510112685
(71) Applicant: Hangzhou Hikvision Digital Technology Co., Ltd., Hangzhou, Zhejiang 310051 (CN)
(72) Inventor: ZHOU, Mingyao, Hangzhou Zhejiang 310051 (CN); PU, Shiliang, Hangzhou Zhejiang 310051 (CN); YAN, Chun, Hangzhou Zhejiang 310051 (CN); LI, Xin, Hangzhou Zhejiang 310051 (CN); TANG, Jinquan, Hangzhou Zhejiang 310051 (CN)
(74) Representative: Penza, Giancarlo
(86) International application number: PCT/CN2015/098227
(87) International publication number: WO 2016/145919

(57) **Abstract**

The disclosure discloses a method and system for scheduling a video analysis task. The method includes: the video analysis task which is received is evaluated, and then is issued to a cluster for execution (S1); an execution state of the video analysis task is monitored in real time, and whether the video analysis task is required to be dynamically regulated or not is determined (S2); and allocated resources are regulated for the video analysis task, according to a priority of the video analysis task, when the video analysis task is required to be dynamically regulated (S3). Resource allocation for the tasks is automatically regulated to implement automatic and reasonable integration and full utilization of the resources, automatic load balancing is implemented.

## Description

This application is filed based upon and claims priority to Chinese Patent Application of International Application No. 201510112685.3, filed on 2015/03/13 and named after "method and system for scheduling video analysis task", the entire contents of which are incorporated herein by reference.

### Technical Field

The disclosure relates to the technical field of intelligent analysis, and more particularly to a method and system for scheduling a video analysis task.

### Background

An intelligent video analysis technology is a "Machine brain" part in "Machine eyes + Machine brain" of a third development stage of a monitoring technology. Through the intelligent video analysis technology, data analysis and characteristic extraction are performed by a machine on a monitoring judgment of a "Human brain" over a video picture, as to form an algorithm for implantation into a machine, so that automatic detection and analyzation to the video picture by a "Machine brain" is formed, and an alarm or another operation is given. Through the intelligent video analysis technology, by virtue of a high data processing capability of a computer, useless or interference information in the video picture is filtered, and key useful information in a video source is automatically analyzed and extracted, so that not only may a video camera become a human eye, but also the computer may become a human brain.

A video analysis task, which is involved in an analysis processing process of an intelligent video analysis technology, is a relatively complex task. The application scenarios involved by the video analysis task include a human face, a license plate, a behavior and the like. In a video analysis task, a density of a target object appearing in each video (i.e. the number of the target object appearing during analysis of each frame, for example, the number of the target object such as a person and a vehicle), may greatly influence video analysis efficiency. For example: when the number is larger, the analysis efficiency is lower and the speed is lower. In addition, resource consumption, requirements and the like of born hardware resources in each scenario are different. Furthermore, in the field of video analysis, a specific analysis manner, i.e. frame analysis, is adopted, and it is also necessary to keep frames continuous (videos are forbidden to be freely segmented in an image frame manner), so that analysis of each frame is associated with previous and next frames, a result error may be generated from the point of a single frame and an analysis result may be repeated from the point of multiple frames. Therefore, the most appropriate manner is to ensure that there is no failure or abnormal interruption during execution of an analysis task, which also requires a designed scheduling mechanism for an intelligent video analysis task, to ensure the task to be performed to obtain a target on a premise of keeping a lowest running condition of the task.

At present, task scheduling methods in a related art mainly include the following types:
1: resources occupied by a task are configured by adopting a uniform allocation algorithm, and such methods seem to be based on a fair allocation principle, but actually may cause resource waste;
2: a task progress is scheduled by adopting a priority, such methods are likely to cause clogging of task, and in addition, a priority set artificially may not accurately represent a real priority of the task, which may make a really important task very likely to be kept in a queuing state; and
3: initial task allocation is performed by adopting the priority or a uniform allocation manner, task resources are dynamically allocated in a task execution process, but there is no analysis made on minimum resource consumption of the task, which easily lead to the task is running very slow or even dead.

### Summary

The disclosure provides a method and system for scheduling a video analysis task, which may solve the problem of how to ensure that resources allocated to tasks are automatic and dynamic regulating in a task execution process, thereby implementing dynamic task regulation, full resource utilization and automatic load balancing, and further effectively avoiding a condition of long-term running of a high-priority video analysis task due to hardware resource abnormities.

According to an aspect of the disclosure, a method for scheduling a video analysis task is provided, the method including: evaluating the video analysis task which is received, and then issuing the video analysis task to a cluster for execution; monitoring an execution state of the video analysis task in real time, and determining whether the video analysis task is required to be dynamically regulated or not; and when the video analysis task is required to be dynamically regulated, regulating allocated resources for the video analysis task according to a priority of the video analysis task, wherein regulating the allocated resources is to provide, on a premise that a low-priority video analysis task is able to be executed normally, a part of resources of the low-priority video analysis task for a high-priority video analysis task requiring more resources.

According to an embodiment of the present disclose, evaluating the video analysis task which is received, and then issuing the video analysis task to the cluster for execution includes: analyzing the video analysis task which is received, to determine execution time of the video analysis task; and determining to issue a whole video analysis task or a plurality of subtasks to the cluster for execution, according to the execution time, determined by analysis, of the video analysis task; wherein the plurality of subtasks is obtained by segmenting the video analysis task in a time slice manner.

According to an embodiment of the present disclose, issuing the video analysis task to the cluster for execution includes: issuing the plurality of subtasks or the whole video analysis task to the cluster for execution, according to a preset task time threshold value and the execution time, determined by analysis, of the video analysis task.

According to an embodiment of the present disclose, the execution state of the video analysis task of, monitored in real time, of the video analysis task comprises includes: the execution time of the video analysis task and/or the resources for executing the video analysis task; and when the execution time of the video analysis task exceeds an expected execution time, and/or the resources for executing the video analysis task get abnormal, it is determined that the video analysis task is required to be dynamically regulated.

According to an embodiment of the present disclose, monitoring the execution state of the video analysis task in real time includes: checking, in real time, the execution time of the video analysis task and/or a state of the resources for executing the video analysis task; when it is monitored that the execution time of the video analysis task does not exceed the expected execution time, and, hardware resources for executing the video analysis task do not get abnormal, indicating that the video analysis task runs normally; and when it is monitored that the execution time of the video analysis task exceeds the expected execution time, and/or, the hardware resources for executing the video analysis task get abnormal, indicating that the video analysis task is required to be dynamically regulated.

According to an embodiment of the present disclose, regulating the allocated resources for the video analysis task includes: when the video analysis task is required to be dynamically regulated, checking whether a task pool formed by all the video analysis tasks for which the hardware resources are allocated and are being executed is full or not; when the task pool is not full, allocating free resources to the high-priority video analysis task with a resource requirement, to ensure execution of the video analysis task; and when the task pool is full, allocating resources which are reduced or released from the low-priority video analysis task to the high-priority video analysis task with the resource requirement, on a premise of ensuring that the low-priority video analysis task is able to run normally.

According to an embodiment of the present disclose, regulating the allocated resources for the video analysis task includes: when the video analysis task is required to be dynamically regulated, allocating the resources are reduced or released from the low-priority video analysis task to the high-priority video analysis task with a resource requirement, on a premise of ensuring that the low-priority video analysis task is able to run normally.

According to an embodiment of the present disclose, allocating the resources which are reduced or released from the low-priority video analysis task to the high-priority video analysis task with the resource requirement includes: based on the execution state, obtained by monitoring, of the video analysis task, searching a high-priority video analysis task from the video analysis tasks that are determined to be executed normally, and searching a low-priority video analysis task from the video analysis tasks that are determined to be executed normally; and based on the determined high-priority video analysis task which is executed abnormally and the low-priority video analysis task which is executed normally, releasing and/or reducing a part of resources of the low-priority video analysis task which is normally executed, to allocate to the high-priority video analysis task which is executed abnormally, on a premise of ensuring that the low-priority video analysis task which is executed normally is able to be executed normally.

According to an embodiment of the present disclose, the high-priority video analysis task which is executed abnormally is a video analysis task which has the high priority and of which the execution time is longer than standard time; and the low-priority video analysis task which is executed normally is a video analysis task which has low priorities and of which the execution time is not longer than the standard time.

According to another aspect of the disclosure, a system for scheduling a video analysis task is provided, the system including: an evaluating element, configured to evaluate the video analysis task which is received ,and then issue the video analysis task to a cluster for execution; a monitoring element, connected to the evaluating element and configured to monitor an execution state of the video analysis task in real time, and determine whether the video analysis task is required to be dynamically regulated or not; and a regulating element, connected to the monitoring element and configured to regulate allocated resources for the video analysis task, according to a priority of the video analysis task, when the video analysis task is required to be dynamically regulated, wherein regulating the allocated resources is to provide, on a premise that a low-priority video analysis task is able to be executed normally, a part of resources of the low-priority video analysis task for a high-priority video analysis task requiring more resources.

According to an embodiment of the present disclose, the evaluating element at least includes an analyzing component and a issuing component; the analyzing component is configured to analyze the video analysis task which is received, to determine execution time of the video analysis task; and the issuing component is configured to determine to issue a whole video analysis task or a plurality of subtasks to the cluster for execution, according to the execution time, determined by analysis, of the video analysis task; wherein the plurality of subtasks is obtained by segmenting the video analysis task in a time slice manner.

According to an embodiment of the present disclose, the execution state of the video analysis task of the execution state, monitored in real time, of the video analysis task includes: the execution time of the video analysis task and/or the resources for executing the video analysis task; and when the execution time of the video analysis task exceeds an expected execution time, and/or the resources for executing the video analysis task get abnormal, it is determined that the video analysis task is required to be dynamically regulated.

According to an embodiment of the present disclose, the monitoring element is configured to execute following steps to monitor the execution state of the video analysis task in real time: checking, in real time, the execution time of the video analysis task and/or a state of the resources for executing the video analysis task; when it is monitored that the execution time of the video analysis task does not exceed the expected execution time, and, hardware resources for executing the video analysis task do not get abnormal, indicating that the video analysis task runs normally; and when it is monitored that the execution time of the video analysis task exceeds the expected execution time, and/or, the hardware resources for executing the video analysis task get abnormal, indicating that the video analysis task is required to be dynamically regulated.

According to an embodiment of the present disclose, the regulating element includes a checking component 710, a first regulating component 720 and a second regulating component 730, wherein the checking component 710 is configured to, when the video analysis task is required to be dynamically regulated, check whether a task pool formed by all the video analysis tasks for which the hardware resources are allocated and are being executed is full or not; the first regulating component 720 is configured to, when the task pool is not full, allocate free resources to the high-priority video analysis task with a resource requirement to ensure execution of the video analysis task; and the second regulating component 730 is configured to, when the task pool is full, allocate resources which are reduced or released from the low-priority video analysis task to the high-priority video analysis task with the resource requirement on a premise of ensuring that the low-priority video analysis task is able to run normally.

According to another aspect of the disclosure, a storage medium is provided, which is configured to store program codes executed by the abovementioned method for scheduling the video analysis task.

According to another aspect of the disclosure, a computer terminal is provided, which is configured to execute program codes of the steps provided by the abovementioned method for scheduling the video analysis task.

According to another aspect of the disclosure, a system for scheduling a video analysis task is provided, which includes at least one processors, a memory and a transmission device, wherein the memory is configured to store program codes executed by the abovementioned method for scheduling the video analysis task; the transmission device is configured to receive or send data through a network; the processor is configured to call information and application programs stored in the memory through the transmission device to execute the following steps: evaluating the video analysis task which is received, and then issuing the video analysis task to a cluster for execution; monitoring an execution state of the video analysis task in real time, and determining whether the video analysis task is required to be dynamically regulated or not; and regulating allocated resources for the video analysis task according to a priority of the video analysis task, when the video analysis task is required to be dynamically regulated, wherein regulating the allocated resources is to provide, on a premise that a low-priority video analysis task is able to be executed normally, a part of resources of the low-priority video analysis task for a high-priority video analysis task requiring more resources.

The method and system for scheduling a video analysis task according to the disclosure are applied to the field of intelligent video analysis to improve a task scheduling technology involved in an analysis technology. In a case of any task execution problem in a task execution process, the solutions of the disclosure may automatically and dynamically regulate the tasks, and may mainly automatically regulate the hardware resources allocated to the tasks, to enable the high-priority video analysis task to fully utilize the hardware resources, on the premise of avoiding failures of the low-priority video analysis task. According to the solutions of the disclosure, resource allocation for the tasks is automatically regulated, to implement automatic and reasonable integration and full utilization of the resources, thus automatic load balancing is implemented, and shortcomings of excessively long running and execution time of the high-priority video analysis task and low video analysis processing efficiency, due to hardware resource abnormities, are effectively avoided.

### Brief Description of the Drawings

Fig. 1 is a flowchart of an embodiment of a method for scheduling a video analysis task according to the disclosure;
Fig. 2 is a flowchart of an embodiment of Step S1 in Fig. 1;
Fig. 3 is a flowchart of an embodiment of Step S3 in Fig. 1;
Fig. 4 is a flowchart of an embodiment of Step S33 in Fig. 3;
Fig. 5 is a schematic diagram of an embodiment of a system for scheduling video analysis task according to the disclosure;
Fig. 6 is a schematic diagram of an embodiment of an evaluating element in Fig. 5;
Fig. 7 is a schematic diagram of an embodiment of a regulating element in Fig. 5; and
Fig. 8 is a schematic diagram of an embodiment of a second regulating component in Fig. 7.

### Detailed Description

For making the purpose, technical solutions and advantages of the disclosure clearer, the disclosure will be further described below in detail with reference to specific alternative embodiments and the drawings. It should be understood that these descriptions are only exemplary and not intended to limit the scope of the disclosure. In addition, descriptions about known structures and technologies are eliminated in the descriptions made below to avoid unnecessary confusions about the concept of the disclosure.

It is noted here at first that a "task scheduling method" for video analysis is involved in the solutions of the disclosure. A task scheduling method in the field of intelligent video analysis refers to a method that: global task scheduling is performed on massive video analysis tasks, and according to a priority, a extent of complexity and the like and even a change, of the video analysis task, hardware resources are allocated and a task execution sequence is regulated.

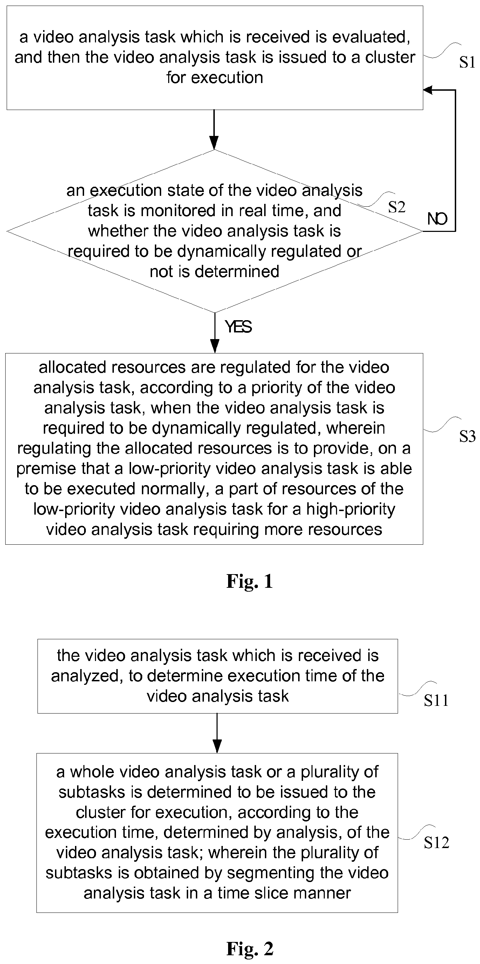

Fig. 1 is a flowchart of a method for scheduling a video analysis task in the disclosure. As shown in Fig. 1, the method for scheduling the video analysis task is specifically described below.

In Step S1, a video analysis task which is received is evaluated, and then the video analysis task is issued to a cluster for execution.

In an alternative embodiment, one or more users may send a request for performing analysis processing on video data; and/or, a time point when a request for performing analysis processing on the video data is sent, and then the request of the user is automatically sent. The request is received, that is, a task, indicated by the request of the user, of performing video analysis on a video is received. The received video analysis task is evaluated at first, for example, an execution time length and the like of the video analysis task is evaluated, and then the video analysis task or subtasks of the video analysis task is/are issued to the cluster for execution. Evaluation may include pre-analysis and preliminary processing on the task.

In an alternative embodiment, as shown in Fig. 2, an evaluation (including pre-analysis, preliminary processing and the like) process and an issuing task process are further described below.

Step S11: the video analysis task which is received is analyzed, to determine execution time of the video analysis task.

In an alternative embodiment, each video analysis task (called as task hereinafter) has corresponding completion time required by execution processing (i.e. video analysis), i.e. the execution time of the task. Such a period of the task analysis time may be independently defined by the user, for example: video data of 12 hours in a day is analyzed.

Step S12: a whole video analysis task or a plurality of subtasks is determined to be issued to the cluster for execution, according to the execution time, determined by analysis, of the video analysis task; wherein the plurality of subtasks is obtained by segmenting the video analysis task in a time slice manner.

In an alternative embodiment, issuing the video analysis task to the cluster for execution includes: according to the execution time, determined by analysis, of the video analysis task and a preset task time threshold value, the video analysis task is divided into a plurality of subtasks to the cluster for execution, or the whole video analysis task is issued to the cluster for execution. Optionally, the execution time of the received task initiated by the user is pre-analyzed, and then task processing is performed based on the execution time. For example, the time threshold value of the task may be preset, for example, an hour is a division time slice for obtaining the subtask by dividing, and whether the video analysis task is required to be segmented or not is determined according to the analyzed execution time of the tasks. For example, when a task is required to execute analysis for 12 hours, it may be divided (segmented) into 12 subtasks according to the time threshold value of the task of 1 hour for subtask division. When the time threshold value of the task is preset to be 12 hours, the task required to execute analysis for 12 hours, is not required to be divided into subtasks according to time slices. Furthermore, whether segmentation is required to be performed according to the time slice manner or not is determined according to a length of the execution time of the video analysis task. When segmentation is not required to be performed, the video analysis task is directly issued to the cluster to execute the video analysis task as a whole; and When segmentation is required be performed, a plurality of subtasks are obtained by segmentation according to the time slice manner for issuing to the cluster for execution.

After receiving an execution request of the tasks or the subtasks, the cluster which performs video analysis task processing may select proper executers (hardware resources, for example: processors and memories) according to estimated conditions of each task and subtask (for example: the execution time and required resources required by the subtask or the task) in the cluster, and then the executers execute the tasks.

According to an embodiment of the present disclose, the same scenario may be repeatedly tested to estimate the execution time and optimal allocated resources.

According to an embodiment of the present disclose, an estimation manner for execution time of a complete task or execution time of single subtasks, in the estimated conditions, may be analysis over the task or the subtask in Step S11 (for example: predetermination by the user after repeated testing of the same scenario). Furthermore, overall execution time of the subtasks is the execution time of the corresponding complete task.

According to an embodiment of the present disclose, the required resources in the estimated conditions mainly include hardware resources, such as processors, and may be obtained in a manner of determining the number of the processors to be allocated to the corresponding tasks, according to scales of the task (for example: the length of the execution time, the priority and the like are determined after repeated testing of the same scenario).

In Step S2, an execution state of the video analysis task is monitored in real time, and whether the video analysis task is required to be dynamically regulated or not is determined.

According to an embodiment of the present disclose, dynamic regulation refers to reallocating resources or regulating resource configuration, for the tasks which run in real time according to changes in the execution state, monitored in real time, of the tasks on the premise of ensuring normal running of a video analysis task with a lowest priority.

According to an embodiment of the present disclose, monitoring the execution state of the video analysis task in real time, includes: for example, the execution time/expected ending time of the video analysis task, and/or, states of resources for executing the video analysis task (including: resource utilization rates and resource states of some executers to which new tasks with relatively high priorities are required to be allocated) are checked in real time. Moreover, real-time monitoring refers to scanning the execution state of each task which runs in a task pool, and continuously checking execution conditions of the tasks, for example, time states such as time for which the tasks have been executed and whether time points when execution is ended are reached or not, and/or whether the states of the execution resources (such as utilization rates of the executers) of the tasks are abnormal or not, and/or whether the states of the execution resources to which the new tasks are allocated are abnormal or not, etc..

In an alternative embodiment, setting of expected time, hardware resource abnormities or the like may specifically be determined as a condition, for monitoring and judging whether the tasks are required to be dynamically regulated or not. Specifically, in a monitoring process, the state of the task which is running (or being executed) is continuously acquired, wherein the real-time execution state of the tasks may include: the time for which the task has been executed/the execution time, the state of the utilization rates of the occupied hardware resources and the like.

When it is monitored that the execution time of the video analysis task does not exceed the expected execution time (that is, the execution time is not overdue) and the hardware resources for executing the video analysis task do not get abnormal (for example, the resource utilization rates: memory occupancies of the processors do not exceed 90%), it is indicated that the video analysis task run normally. At this moment, the execution condition of the task is continued to be monitored. That is, it is confirmed that dynamic regulation (such as resource regulation and time regulation) is not required to be performed on the video analysis task, no subsequent operations are executed, and each running task in existing task pool is continuously monitored and scanned.

When it is monitored that the execution time of the video analysis task exceeds the expected execution time (that is, the execution time is excessively long and has been overdue or exceed a time limit), and/or, the hardware resources for executing the video analysis task get abnormal (for example: the memory occupancies of the processors exceed 90%), it is indicated that the video analysis task is required to be dynamically regulated. For example: processing of high-priority tasks is accelerated, or, a part of resources not required by tasks which are about to finish running are released and reallocated to the high-priority tasks or the new tasks.

Furthermore, in the monitoring process, when it is found that the execution time of the tasks exceeds the expected execution time or the resources get abnormal, the phenomena of processing errors, infinite running loop and the like, caused by the fact that it is actually impossible to continue executing the video analysis task, or the tasks are executed beyond the time limit, may be very likely to appear. At this moment, it is confirmed that the tasks are required to be dynamically regulated, to ensure that tasks required to be executed run normally, and ended tasks release the occupied resources to tasks with a requirement for use, or the high-priority tasks are accelerated, to ensure the smooth and efficient execution, and the like.

According to an embodiment of the present disclose, the expected execution time (i.e. expected execution ending time, expected execution completion time and the like of the tasks) and/or judgment conditions for abnormal states of the hardware resources may be preset. The expected execution time may be set, for example, according to the execution time in Step S12, for example, time lengths of the execution time and the expected execution time are equal, or the expected execution time may be slightly prolonged for a certain time length, on a premise of the execution time lengths obtained in Step S12, or, the ending time of the video analysis task may be preset, according to the starting time of the video analysis task, and the like. Abnormities of the hardware resources for example, may be set according to experiences in hardware resource abnormity detection, during running of a system such as an Operating System (OS) and a cloud processing system, or are judged or set according to an existing state abnormity detection manner, or the like.

Furthermore, when the tasks are required to be dynamically regulated, a request (or a command or the like) of dynamically regulating the tasks may be sent.

In Step S3, allocated resources are regulated for the video analysis task, according to a priority of the video analysis task, when the video analysis task is required to be dynamically regulated, wherein regulating the allocated resources is to provide, on a premise that a low-priority video analysis task is able to be executed normally, a part of resources of the low-priority video analysis task for a high-priority video analysis task requiring more resources.

According to an embodiment of the present disclose, each task running in the task pool has own priority. For example, execution priorities of four running tasks A, B, C and D are sequentially 1, 2, 2 and 3, that is, A has the highest priority, B and C take the second place, and D has the lowest priority.

In addition, the priorities of the tasks may also change with an execution process. For example, the priorities of the tasks may change with promotion of task execution. For one example: when execution time of a task is getting closer to a preset ending time of the task in the executing process, the priority of the task is higher. Therefore, when the resources are regulated, if such tasks about to be ended get abnormal and are required to be regulated, the tasks are usually found at first, more resources are configured for the tasks to complete the tasks at ending time points of the tasks, and the resources occupied by the tasks are further released for the other tasks or the new tasks to use.

In an alternative embodiment, regulating the allocated resources may include: resources, which may be reduced, of the video analysis task is regulated on the premise of ensuring normal execution of the low-priority tasks, and the regulated resources are added (allocated) to the high-priority video analysis task required to be accelerated, namely a part of the resources of the low-priority video analysis task are provided for the high-priority video analysis task requiring more resources.

As an example embodiment, on the premise of avoiding failures of the tasks caused by regulation of the allocated resources, for concurrent tasks with different priorities, running time is automatically calculated in a running process of the tasks, and high-priority tasks are preferably considered. For example: in the running process of the tasks, if the high-priority video analysis task run relatively slow when the running states of the tasks are monitored, the low-priority video analysis task is automatically searched, and on the premise of ensuring normal running of the low-priority video analysis task, a part of the resources of the low-priority video analysis task are regulated, and these resources are allocated to the high-priority video analysis task, to continue normal running of the tasks. In an alternative embodiment, standard task running time is obtained by training massive data through an estimation algorithm (here, training may be implemented according to an existing estimation algorithm, and thus will not be elaborated).

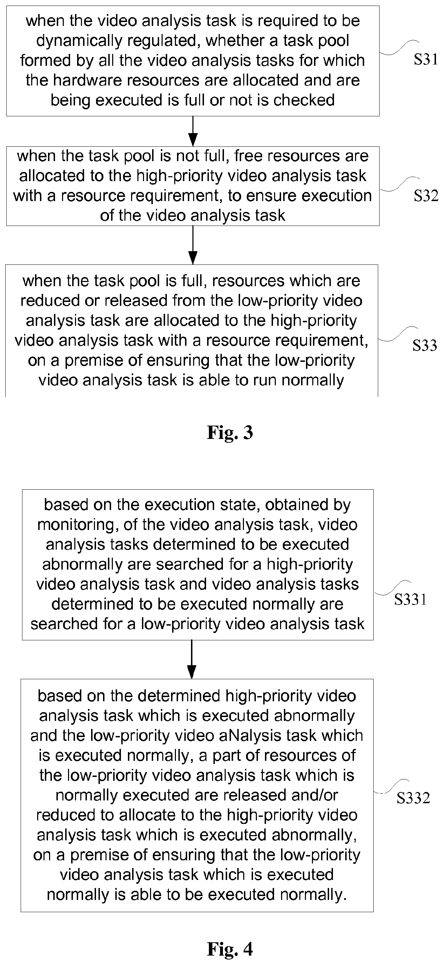

Specifically, Step S3 is further described with reference to a flow, shown in Fig. 3, of a dynamic regulation embodiment.

Step S31: when the video analysis task is required to be dynamically regulated, whether a task pool formed by all the video analysis tasks which are allocated with the hardware resources and being executed is full or not is checked.

The task pool in the cluster includes all the video analysis tasks which are allocated with the hardware resources and being executed. During real-time monitoring, task monitoring service may start scanning each task in the task pool to acquire the states (for example: the resource utilization rate and estimated ending time) of the video analysis task which is running. After regulation requests for the tasks are received, the video analysis task pool is checked to determine whether the video analysis task pool is full or not. When the video analysis task pool is not full, it is indicated that there are still free hardware resources. When the video analysis task pool is full, it is indicated that all hardware resources have been allocated, and regulation is required. For example, there is a new task A with a high priority and the cluster allocates two executers to the task A, so that task executers (execution carriers) are required to be regulated according to the priorities.

Step S32: when the task pool is not full, free resources to the high-priority video analysis task with a resource requirement is allocated, to ensure execution of the video analysis task.

In an alternative embodiment, when the task pool is not full, it is indicated that there are free resources, and when the new tasks or the high-priority tasks have the resource requirement, for example: the corresponding hardware resources are required to be allocated to the new tasks to execute, or execution processing of the high-priority tasks is required to be accelerated, the free resources may be preferably allocated to these tasks with the resource requirement (execution processing or required to be accelerated). Furthermore, such allocation may be performed with reference to the priorities, and the resources are preferably allocated to the high-priority video analysis task to ensure smooth and efficient execution of the video analysis task.

Step S33: when the task pool is full, resources which are reduced or released from the low-priority video analysis task are allocated to the high-priority video analysis task with a resource requirement, on a premise of ensuring that the low-priority video analysis task is able to run normally.

When the task pool has been full, it is indicated that all available resources have been allocated to the tasks which are being executed, and the task execution carriers are required to be regulated.

The task monitoring service may scan each task in the task pool to acquire the states (the resource utilization rates, the estimated ending time and the like) of the tasks which are running, so that the acquired estimated task ending time (estimated completion time) may be substituted into an estimated task time formula in an alternative embodiment.
when it is found that the estimated completion time is excessively long, abnormities are determined, and when there are no abnormities, the state of the task which is running is continued to be acquired for another round.
when any abnormity is found, the high-priority tasks are preferably considered. For example, relatively slow running conditions (excessively long estimated completion time) of the high-priority task is found in the running process of the task, that is, the task required to be accelerated is found, and the video analysis task have the characteristics of high priorities, and the execution time longer than the standard time and the like. Then, the state of each task in the task pool is continued to be scanned to automatically search for the low-priority task, and a part of the resources occupied by them are regulated and allocated to the high-priority video analysis task which is executed abnormally (excessively low in speed and required to be accelerated) on a premise of ensuring that the low-priority video analysis task is able to run normally, thereby ensuring that the high-priority video analysis task is smooth and efficient execution(i.e. acceleration of execution processing of the video analysis task).

Furthermore, the tasks of which the resources may be reduced are found, the video analysis task have the characteristics of low priorities, execution time not longer than the standard time and the like, minimum resources required by normal running of the low-priority video analysis task is calculated, all the resources which may be regulated are extracted from the low-priority video analysis task, for example, these resources are released or reduced from the task, and these resources are finally allocated to the high-priority task, that is, the resources are reallocated to implement dynamic regulation, to enable the high-priority video analysis task and the low-priority video analysis task to continue running normally, based on the priorities and the execution state, monitored in real time, of the tasks.

Optionally, in Step S3, when the video analysis task is required to be dynamically regulated, the resources which are reduced or released from the low-priority video analysis task is allocated to the high-priority video analysis task with a resource requirement, on a premise of ensuring that the low-priority video analysis task is able to run normally.

It is unnecessary to check whether the task pool formed by all the tasks which are allocated with the hardware resources and being executed is full or not, and on the premise of ensuring normal running of the low-priority video analysis task, a part of the resources occupied by the low-priority video analysis task are directly regulated and allocated to the high-priority video analysis task which is executed abnormally (excessively low in speed and required to be accelerated), thereby ensuring smooth and efficient execution of the high-priority video analysis task (i.e. acceleration of execution processing of the video analysis task).

A process that the resources of the low-priority video analysis task are released and/or reduced, for configuration to the high-priority video analysis task on a premise of that the low-priority video analysis task is able to run normally, is described below with reference to a flow, shown in Fig. 4, of an embodiment of performing resource regulation on tasks according to priorities.

Step S331: based on the execution state, obtained by monitoring, of the video analysis task, video analysis tasks determined to be executed abnormally are searched for a high-priority video analysis task and video analysis tasks determined to be executed normally are searched for low-priority video analysis task.

In an alternative embodiment, the estimated task ending time (estimated completion time) is substituted into the estimated task time formula according to the states: the resource utilization rates, the estimated ending time and the like, acquired by real-time monitoring (the task monitoring service scans each task in the task pool), of the tasks which are running. When it is found by calculation that the estimated completion time is excessively long, it is judged that the execution state of the tasks is abnormal. When the estimated completion time has no abnormity/is abnormal, the state of the task which is running is continued to be acquired in a new real-time monitoring process.

Furthermore, all the tasks which the task an execution state is judged to be abnormal are found from high to low priorities. For example, in the tasks A, B, C and D in the abovementioned example, when the tasks A and D of which an execution state are abnormal (execution time in the running process of the tasks is relatively long) are found, the video analysis task A with high-priority is found at first. The high-priority video analysis task A has the characteristics of high priority, execution time longer than the specified standard time (for example: it may undoubtedly not be completed within the standard time if keeping running at a current speed) and the like. Therefore, the high-priority video analysis task A has an acceleration requirement, that is, it is necessary to provide more resources for execution processing to ensure its successful completion (for example: it may be completed according to the execution time or the slice time obtained by evaluation).

Furthermore, in an alternative embodiment, the low-priority video analysis task is automatically searched according to the priorities, and whether the low-priority tasks which are found such as the task B run normally or not is determined, according to the execution state (the time, the resource utilization rates and the like), acquired by real-time monitoring (the task monitoring service scans each task in the task pool), of the tasks. When the low-priority tasks are found run normally is determined, the execution time is not longer than the specified standard time. Therefore, the low-priority video analysis task B has the characteristics of relatively low priority, execution time not longer than the specified standard time and the like. The low-priority video analysis task B may be determined as a task for regulation, and the task also has capable of releasing/reducing resources, on a premise of ensuring the normal running of the low-priority video analysis task B.

Step S332: based on the determined high-priority video analysis task which is executed abnormally and the low-priority video analysis task which is executed normally, a part of resources of the low-priority video analysis task which is normally executed are released and/or reduced to allocate to the high-priority video analysis task which is executed abnormally, on a premise of ensuring that the low-priority video analysis task which is executed normally is able to be executed normally.

According to an embodiment of the present disclose, when the execution state of the found low-priority video analysis task is normal, in an alternative embodiment, the number of resources for running by the low-priority video analysis task B which runs normally, and the number of idle resources allocated to the low-priority video analysis task B may be determined according to the acquired an execution state, and a minimum resource requirement for normal running of the low-priority video analysis task B is further calculated. Then, a part of occupied resources are released and/or reduced from the running task B with the characteristics of relatively low priority and execution time not longer than the specified standard time, that is, the resources which may be regulated is acquired from the low-priority video analysis task B. All the resources which may be reduced are extracted from the low-priority video analysis task, on a premise of ensuring that the low-priority video analysis task which is executed normally is able to be executed normally.

In a further regulation process, these resources may be allocated to the task with high-priority, excessively-low-execution speed (executed abnormally), requiring more resources and required to be accelerated. For example, a part of the resources from the low-priority video analysis task B which is executed normally are added to the high-priority task A required to be accelerated. Therefore, the high-priority video analysis task A and the low-priority video analysis task B may both continue running normally.

Therefore, in a case that a task execution problem occurs in a task execution process, the task may be automatically and dynamically regulated. On a premise of avoiding failures of the low-priority video analysis task, the hardware resources allocated to the task may be automatically regulated to enable the high-priority video analysis task to fully utilize the hardware resources, and normal execution of the whole video analysis task is ensured.

An embodiment of a system for scheduling the video analysis task in the disclosure will be described below with reference to the drawings. The system of the disclosure corresponds to the method of the disclosure.

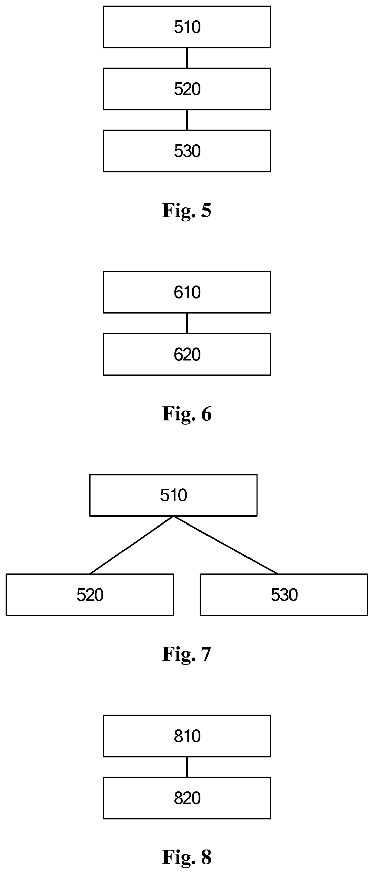

Fig. 5 is a schematic diagram of an embodiment of a system for scheduling a video analysis task according to the disclosure. The system at least includes: an evaluating element 510, a monitoring element 520 and a regulating element 530.

The evaluating element 510 is configured to evaluate a video analysis task which is received, and then issue the video analysis task to a cluster for execution. Specific processing and function of the element may refer to specific descriptions about Step S1.

In an alternative embodiment, the evaluating element 510 at least further includes an analyzing component 610 and issuing component 620 shown in Fig. 6.

According to an embodiment of the present disclose, the analyzing component 610 is configured to analyze the video analysis task which is received, to determine an execution time of the video analysis task. Specific processing and function of the module may refer to specific descriptions about Step S11.

According to an embodiment of the present disclose, the issuing component 620 is connected to the analyzing component 610, and is configured to determine to issue a whole video analysis task or a plurality of subtasks to the cluster for execution, according to the execution time, determined by analysis, of the video analysis task; wherein the plurality of subtasks is obtained by segmenting the video analysis task in a time slice manner. Specific processing and function of the module may refer to specific descriptions about Step S12.

The monitoring element 520 is connected to the evaluating element 510, and is configured to monitor an execution state of the video analysis task in real time and determine whether the video analysis task is required to be dynamically regulated or not. Specific processing and function of the element may refer to specific descriptions about Step S2.

The regulating element 530 is connected to the monitoring element 520, and is configured to regulate allocated resources for the video analysis task, according to a priority of the video analysis task, when the video analysis task is required to be dynamically regulated, wherein regulating the allocated resources is to provide, on a premise that a low-priority video analysis task is able to be executed normally, a part of resources of the low-priority video analysis task for a high-priority video analysis task requiring more resources. Specific processing and function of the element may refer to specific descriptions about Step S3.

In an alternative embodiment, the regulating element 530 at least further includes a checking component 710, a first regulating component 720 and a second regulating component 730 shown in Fig. 7.

According to an embodiment of the present disclose, the checking component 710 is configured to, when the video analysis task is required to be dynamically regulated, check whether a task pool formed by all the video analysis task for which hardware resources are allocated and are being executed is full or not. Specific processing and function of the module may refer to specific descriptions about Step S31.

According to an embodiment of the present disclose, the first regulating component 720 is connected to the checking component 710, and is configured to, when the task pool is not full, allocate free resources to the high-priority video analysis task with a resource requirement to ensure execution of the video analysis task. Specific processing and function of the module may refer to specific descriptions about Step S32.

According to an embodiment of the present disclose, the second regulating component 730 is connected to the checking component 710, and is configured to, when the task pool is full, allocate resources which are reduced or released from the low-priority video analysis task to the high-priority video analysis task with a resource requirement, on a premise of ensuring that the low-priority video analysis task is able to run normally. Specific processing and function of the module may refer to specific descriptions about Step S33.

Optionally, in an alternative embodiment, the regulating element 530 at least further includes the second regulating component 730. The second regulating component 730 is configured to, when the video analysis task is required to be dynamically regulated, allocate the resources which are reduced or released from the low-priority video analysis task to the high-priority video analysis task with the resource requirement, on a premise of ensuring that the low-priority video analysis task is able to run normally.

It is unnecessary to check whether the task pool formed by all the tasks which are allocated with the hardware resources and being executed is full or not, and on a premise of ensuring normal running of the low-priority video analysis task, the second regulating component 730 directly regulates and allocates a part of the resources occupied by the low-priority video analysis task to the high-priority video analysis task which is executed abnormally (excessively low in speed and required to be accelerated), thereby ensuring that the high-priority video analysis task is to smooth and efficient execution(i.e. acceleration of execution processing of the video analysis task).

In an alternative embodiment, the second regulating component 730 at least further includes a priority task searching component 810 and second regulation sub-component 820 shown in Fig. 8.

According to an embodiment of the present disclose, the priority task searching component 810 is configured to, based on the execution state, obtained by monitoring, of the video analysis task, search video analysis tasks determined to be executed abnormally for a high-priority video analysis task and search video analysis tasks determined to be executed normally for a low-priority video analysis task. Specific processing and function of the module may refer to specific descriptions about Step S331.

According to an embodiment of the present disclose, the second regulation sub-component 820 is configured to, based on the determined high-priority video analysis task which is executed abnormally and the low-priority video analysis task which is executed normally, release and/or reduce a part of resources of the low-priority video analysis task which is normally executed for allocation to the high-priority video analysis task which is executed abnormally, on a premise of ensuring normal execution of the low-priority video analysis task which is executed normally. Specific processing and function of the module may refer to specific descriptions about Step S332.

Processing and functions realized by the components and structures involved in the embodiment corresponding to the system of the disclosure substantially correspond to the embodiment related to each abovementioned method, referring to Fig. 1-4, so that undetailed parts in the descriptions of the embodiment of the system, may refer to related descriptions in the embodiment of the method, and will not be elaborated herein.

According to the method and system scheduling a video analysis task in the disclosure, it may be ensured that the tasks are issued to the cluster for execution after being segmented into a plurality of subtasks, and moreover, in a case of any problem occurs in the task execution process, the tasks are required to be dynamically regulated, for example: the hardware resources and the like allocated to the tasks may be automatically regulated, on the premise of no failures of the low-priority video analysis task, to achieve purposes of full resource utilization of the high-priority video analysis task and automatic load balancing and further effectively avoid the condition of long-term running of the high-priority video analysis task due to hardware resource abnormities.

It should be understood that the specific alternative embodiments of the disclosure are not intended to form limits to the disclosure but only adopted to exemplarily describe or explain the principle of the disclosure. Therefore, any modifications, equivalent replacements, improvements and the like made without departing from the spirit and scope of the disclosure shall fall within the scope of protection of the disclosure. In addition, the appended claims of the disclosure are intended to cover all varied and modified cases falling within the scope and boundary of the appended claims or equivalent forms of the scope and the boundary.

An embodiment of the disclosure further provides a storage medium, which is configured to store program codes executed by the abovementioned method for scheduling the video analysis task. Optionally, in the embodiment, the storage medium may be configured to store program codes for executing the following steps: a video analysis task which is received is evaluated, and then the video analysis task is issued to a cluster for execution; an execution state of the video analysis task is monitored in real time, and whether the video analysis task is required to be dynamically regulated or not is determined; and allocated resources are regulated for the video analysis task according to a priority of the video analysis task when the video analysis task is required to be dynamically regulated, wherein regulating the allocated resources is to provide, on a premise of ensuring that a low-priority video analysis task is able to be executed normally, a part of resources of the low-priority video analysis task for a high-priority video analysis task requiring more resources.

Optionally, the storage medium is further configured to store program codes for executing the following steps: the video analysis task which is received is analyzed, to determine execution time of the video analysis task; and a whole video analysis task or a plurality of subtasks is/are determined to be issued to the cluster for execution, according to the execution time, determined by analysis, of the video analysis task; wherein the plurality of subtasks is obtained by segmenting the video analysis task in a time slice manner.

Optionally, the storage medium is further configured to store a program code for executing the following step: the plurality of subtasks or the whole video analysis task are/is issued to the cluster for execution, according to a preset task time threshold value and the execution time, determined by analysis, of the video analysis task.

Optionally, the storage medium is further configured to store program codes for executing the following steps: the execution time of the video analysis task and/or a state of the resources for executing the video analysis task are checked in real time; when it is monitored that the execution time of the video analysis task does not exceed the expected execution time, and, hardware resources for executing the video analysis task do not get abnormal, it is indicated that the video analysis task run normally; and when it is monitored that the execution time of the video analysis task exceeds the expected execution time, and/or, the hardware resources for executing the video analysis task get abnormal, it is indicated that the video analysis task is required to be dynamically regulated.

Optionally, the storage medium is further configured to store program codes for executing the following steps: when the video analysis task is required to be dynamically regulated, whether a task pool formed by all the video analysis tasks for which hardware resources are allocated and are being executed is full or not is checked; when the task pool is not full, free resources are allocated to the high-priority video analysis task with a resource requirement to ensure execution of the video analysis task; and when the task pool is full, resources which are reduced or released from the low-priority video analysis task are allocated to the high-priority video analysis task with the resource requirement on a premise of ensuring that the the low-priority video analysis task is able to run normally.

Optionally, the storage medium is further configured to store a program code for executing the following step: when the video analysis task is required to be dynamically regulated, the resources which are reduced or released from the low-priority video analysis task are allocated to the high-priority video analysis task with the resource requirement, on a premise of ensuring that the low-priority video analysis task is able to run normally.

Optionally, the storage medium is further configured to store program codes for executing the following steps: based on the execution state, obtained by monitoring, of the video analysis task, a high-priority video analysis task is searched from the video analysis task that is determined to be executed abnormally, and, a low-priority video analysis task is searched from the video analysis task that is determined to be executed normally; and based on the determined high-priority video analysis task which is executed abnormally and the low-priority video analysis task which is executed normally, a part of resources of the low-priority video analysis task which are normally executed are released and/or reduced to allocate to the high-priority video analysis task which are executed abnormally on a premise of ensuring that the low-priority video analysis task which is executed normally is able to be executed normally.

An embodiment of the disclosure further provides a computer terminal, which is configured to execute program codes of the steps provided by the abovementioned method for scheduling the video analysis task.

Optionally, an embodiment of the disclosure further provides a system for scheduling a video analysis task, which includes at least one processor, a memory and a transmission device.

According to an embodiment of the present disclose, the memory may be configured to store software programs and module programs, such as program codes executed by a method for scheduling a video analysis task in the embodiments of the disclosure. The processor runs the software programs and module programs stored in the memory, thereby executing various function applications and data processing, namely implementing the method for scheduling the video analysis task. The memory may include a high-speed random access memory, and may also include a nonvolatile memory, such as at least one magnetic storage device, flash memories or other nonvolatile solid-state memories. In some examples, the memory may further include memories remotely arranged with respect to the processor, and these remote memories may be connected to the terminal through a network. An example of the network includes, but not limited to, the Internet, an intranet of an enterprise, a local area network, a mobile communication network and a combination thereof.

The transmission device is configured to receive or send data through a network. A specific example of the network may include a wired network and a wireless network. In an example, the transmission device includes a Network Interface Controller (NIC), which may be connected with other network equipment and a router through a network cable, thereby communicating with the Internet or a local area network. In an example, the transmission device is a Radio Frequency (RF) module, which is configured to communicate with the Internet in a wireless manner.

According to an embodiment of the present disclose, the memory is specifically configured to store a preset operating condition, information of a preset permitted user and an application program.

The processor may call the information and application program stored by the memory through the transmission device to execute the following steps: a video analysis task which is received is evaluated, and then the video analysis task is issued to a cluster for execution; an execution state of the video analysis task is monitored in real time, and whether the video analysis task is required to be dynamically regulated or not is determined; and allocated resources for the video analysis task are regulated according to a priority of the video analysis task when the video analysis task is required to be dynamically regulated, wherein regulating the allocated resources is to provide, on a premise that a low-priority video analysis task is able to be executed normally, a part of resources of the low-priority video analysis task for a high-priority video analysis task requiring more resources

## Claims

1. A method for scheduling a video analysis task, comprising:
evaluating the video analysis task which is received, and then issuing the video analysis task to a cluster for execution;
monitoring an execution state of the video analysis task in real time, and determining whether the video analysis task is required to be dynamically regulated or not; and
when the video analysis task is required to be dynamically regulated, regulating allocated resources for the video analysis task according to a priority of the video analysis task, wherein regulating the allocated resources is to provide, on a premise that a low-priority video analysis task is able to be executed normally, a part of resources of the low-priority video analysis task for a high-priority video analysis task requiring more resources.

2. The method as claimed in claim 1, wherein evaluating the video analysis task which is received, and then issuing the video analysis task to the cluster for execution comprises:
analyzing the video analysis task which is received, to determine execution time of the video analysis task; and
determining to issue a whole video analysis task or a plurality of subtasks to the cluster for execution, according to the execution time, determined by analysis, of the video analysis task; wherein the plurality of subtasks is obtained by segmenting the video analysis task in a time slice manner.

3. The method as claimed in claim 2, wherein issuing the video analysis task to the cluster for execution comprises:
issuing the plurality of subtasks or the whole video analysis task to the cluster for execution, according to a preset task time threshold value and the execution time, determined by analysis, of the video analysis task.

4. The method as claimed in claim 1, wherein the execution state of the video analysis task of the execution state, monitored in real time, of the video analysis task comprises: execution time of the video analysis task and/or resources for executing the video analysis task; and
when the execution time of the video analysis task exceeds an expected execution time, and/or the resources for executing the video analysis task get abnormal, it is determined that the video analysis task is required to be dynamically regulated.

5. The method as claimed in claim 4, wherein monitoring the execution state of the video analysis task in real time comprises:
checking, in real time, the execution time of the video analysis task and/or a state of the resources for executing the video analysis task;
when it is monitored that the execution time of the video analysis task does not exceed the expected execution time, and, hardware resources for executing the video analysis task do not get abnormal, indicating that the video analysis task runs normally; and
when it is monitored that the execution time of the video analysis task exceeds the expected execution time, and/or, the hardware resources for executing the video analysis task get abnormal, indicating that the video analysis task is required to be dynamically regulated.

6. The method as claimed in claim 1, wherein regulating the allocated resources for the video analysis task comprises:
when the video analysis task is required to be dynamically regulated, checking whether a task pool formed by all video analysis tasks for which hardware resources are allocated and are being executed is full or not;
when the task pool is not full, allocating free resources to the high-priority video analysis task with a resource requirement, to ensure execution of the video analysis task; and
when the task pool is full, allocating resources which are reduced or released from the low-priority video analysis task to the high-priority video analysis task with a resource requirement, on a premise of ensuring that the low-priority video analysis task is able to run normally.

7. The method as claimed in claim 1, wherein regulating the allocated resources for the video analysis task comprises:
when the video analysis task is required to be dynamically regulated, allocating resources, which are reduced or released from the low-priority video analysis task, to the high-priority video analysis task with a resource requirement, on a premise of ensuring that the low-priority video analysis task is able to run normally.

8. The method as claimed in claim 6 or 7, wherein allocating the resources, which are reduced or released from the low-priority video analysis task, to the high-priority video analysis task with the resource requirement comprises:
based on the execution state, obtained by monitoring, of the video analysis task, searching a high-priority video analysis task from video analysis task that is determined to be executed abnormally; and searching a low-priority video analysis task from video analysis task that are determined to be executed normally; and
based on the determined high-priority video analysis task which is executed abnormally and the low-priority video analysis task which is executed normally, releasing and/or reducing a part of resources of the low-priority video analysis task which is normally executed, as to allocate to the high-priority video analysis task which is executed abnormally, on a premise of ensuring that the low-priority video analysis task which is executed normally is able to be executed normally.

9. The method as claimed in claim 8, wherein
the high-priority video analysis task, which is executed abnormally, is a video analysis task, which has the high priority and of which execution time is longer than standard time; and
the low-priority video analysis task, which is executed normally, is a video analysis task which has the low priority and of which execution time is not longer than the standard time.

10. A system for scheduling a video analysis task, comprising:
an evaluating element (510), configured to evaluate the video analysis task which is received, and then issue the video analysis task to a cluster for execution;
a monitoring element (520), connected to the evaluating element (510) and configured to monitor an execution state of the video analysis task in real time, and determine whether the video analysis task is required to be dynamically regulated or not; and
a regulating element (530), connected to the monitoring element (520) and configured to regulate allocated resources for the video analysis task, according to a priority of the video analysis task, when the video analysis task is required to be dynamically regulated, wherein regulating the allocated resources is to provide, on a premise that a low-priority video analysis task is able to be executed normally, a part of resources of the low-priority video analysis task for a high-priority video analysis task requiring more resources.

11. The system as claimed in claim 10, wherein the evaluating element (510) at least comprises an analyzing component (610) and an issuing component (620),
the analyzing component (610) is configured to analyze the video analysis task which is received, to determine execution time of the video analysis task; and
the issuing component (620) is configured to determine to issue a whole video analysis task or a plurality of subtasks to the cluster for execution, according to the execution time, determined by analysis, of the video analysis task; wherein the plurality of subtasks is obtained by segmenting the video analysis task in a time slice manner.

12. The system as claimed in claim 10, wherein the execution state of the video analysis task of the execution state, monitored in real time, of the video analysis task comprises: the execution time of the video analysis task and/or the resources for executing the video analysis task; and
when the execution time of the video analysis task exceeds an expected execution time, and/or the resources for executing the video analysis task get abnormal, it is determined that the video analysis task is required to be dynamically regulated.

13. The system as claimed in claim 12, wherein the monitoring element (520) is configured to execute following steps to monitor the execution state of the video analysis task in real time:
checking, in real time, the execution time of the video analysis task and/or a state of the resources for executing the video analysis task;
when it is monitored that the execution time of the video analysis task does not exceed the expected execution time, and, hardware resources for executing the video analysis task do not get abnormal, indicating that the video analysis task runs normally; and
when it is monitored that the execution time of the video analysis task exceeds the expected execution time, and/or, the hardware resources for executing the video analysis task get abnormal, indicating that the video analysis task is required to be dynamically regulated.

14. The system as claimed in claim 10, wherein the regulating element (530) comprises a checking component (710), a first regulating component (720) and a second regulating component (730),
wherein the checking component (710) is configured to, when the video analysis task is required to be dynamically regulated, check whether a task pool formed by all video analysis tasks for which hardware resources are allocated and are being executed is full or not;
the first regulating component (720) is configured to, when the task pool is not full, allocate free resources to the high-priority video analysis task with a resource requirement, to ensure execution of the video analysis task; and
the second regulating component (730) is configured to, when the task pool is full, allocate resources which are reduced or released from the low-priority video analysis task to the high-priority video analysis task with a resource requirement, on a premise of ensuring that the low-priority video analysis task is able to run normally.

15. A storage medium, configured to store program codes executed by the method for scheduling the video analysis task as claimed in claim 1.

16. A computer terminal, configured to execute program codes of steps provided by the method for scheduling the video analysis task as claimed in claim 1.

17. A system for scheduling a video analysis task, comprising at least one processor, a memory and a transmission device, wherein
the memory is configured to store program codes executed by the method for scheduling the video analysis task as claimed in claim 1;
the transmission device is configured to receive or send data through a network;
the at least one processor is configured to call information and application programs stored in the memory through the transmission device to execute the following steps: evaluating the video analysis task which is received, and then issuing the video analysis task to a cluster for execution; monitoring an execution state of the video analysis task in real time, and determining whether the video analysis task is required to be dynamically regulated or not; and regulating allocated resources for the video analysis task, according to a priority of the video analysis task, when the video analysis task is required to be dynamically regulated, wherein regulating the allocated resources is to provide, on a premise that a low-priority video analysis task is able to be executed normally, a part of resources of the low-priority video analysis task for a high-priority video analysis task requiring more resources.
